# EUROPEAN PATENT SPECIFICATION

(11) **EP 2 889 990 B1**
(45) Date of publication and mention of the grant of the patent: **29.06.2016**
(21) Application number: 14193998.3
(22) Date of filing: 20.11.2014
(51) Int. Cl.: H02K 15/04, H02K 15/095

(54) **Device for inserting, winding and layering a wire on one or more stator or rotor cores**
Vorrichtung zum Einsetzen, Aufwickeln und Beschichten eines Drahts auf einem oder mehreren Stator- oder Rotorkernen
Dispositif permettant d'insérer, d'enrouler et de stratifier un fil sur un ou plusieurs noyaux de stator ou de rotor

(30) Priority: 24.12.2013 IT MI20132206
(43) Date of publication of application: 01.07.2015
(73) Proprietor: Marsilli S.p.A., 26012 Castelleone (CR) (IT)
(72) Inventor: Parati, Gian Battista, 26012 CASTELLEONE CR (IT)
(74) Representative: Modiano, Micaela Nadia

(56) References cited:
- EP-A1- 1 278 292
- EP-A1- 1 387 470
- EP-A2- 1 331 719
- WO-A2-2013/008183

## Description

The present invention relates to a device for inserting, winding and layering a wire on one or more stator or rotor cores.

There are various types of device for executing the windings of cores of stators or rotors of electric motors by way of a copper wire. Such devices generally use a wire guide that has the function of directing the wire toward the core during the execution of its winding around the core.

In some devices, which are derived from coil winding devices and can be used to wind some types of core, the wire guide is static while the core on which the winding is to be performed is rotated about its own axis, which is oriented generally at right angles to the direction along which the wire is dispensed by the wire guide.

This type of device can be used only for cores having a simple shape, with pole shoes having a limited extension and with winding wires that have a small diameter.

In other devices it is the core that is static while the wire guide is moved around the core so as to progressively deposit the wire around the core.

These types of device are used generally to wind stator or rotor cores having a more complex shape, in which it is more difficult to reach the bottom of the cavity around the core in which the wire is to be deposited.

An example of these devices is shown in EP-2512013 in the name of this same Applicant, which describes a free wire guide with a radiused wire delivery end.

This type of device has excellent precision in the deposition and layering of the wire around the stator or rotor core, but it has the drawback that it can reach rotation rates of the wire guide around the stator or rotor core that are relatively low and therefore it does not make it possible to achieve high productivity levels.

WO 2013/008183 discloses an apparatus and method for winding coils of conductor wire around respective poles of a core of a component of a electric dynamo machine, comprising a dispenser arm that rotates around the poles to deliver the wire to form wire turns, a first wire guide positioned and moved during winding adjacent to an axial end of a pole being wound, a second wire guide positioned and moved in a first slot adjacent to the pole being wound, and a third wire guide positioned and moved in a second slot adjacent to the pole being wound. A termination member is provided that is capable of achieving connection of the coil leads to termination structures of the core.

The aim of the present invention is to solve this problem by devising a device for inserting, winding and layering a wire on one or more stator or rotor cores, which makes it possible to achieve distinctly higher winding speeds than those achievable with devices of the known type which are based on the technique of performing winding by rotating the wire guide around the stator or rotor core in a static position.

Within this aim, an object of the invention is to provide a device that makes it possible to significantly increase the productivity of machines for producing stator or rotor windings, particularly for providing latest-generation electric motors.

Another object of the invention is to provide a device that can be manufactured at low cost.

A further object of the invention is to provide a device that offers the greatest assurances of safety and reliability in use.

In accordance with the invention, there is provided a device for inserting, winding and layering a wire on one or more stator or rotor cores, as defined in the appended claims.

Further characteristics and advantages of the invention will become better apparent from the description of a preferred but not exclusive embodiment of the device according to the invention, illustrated by way of non-limiting example in the accompanying drawings, wherein:

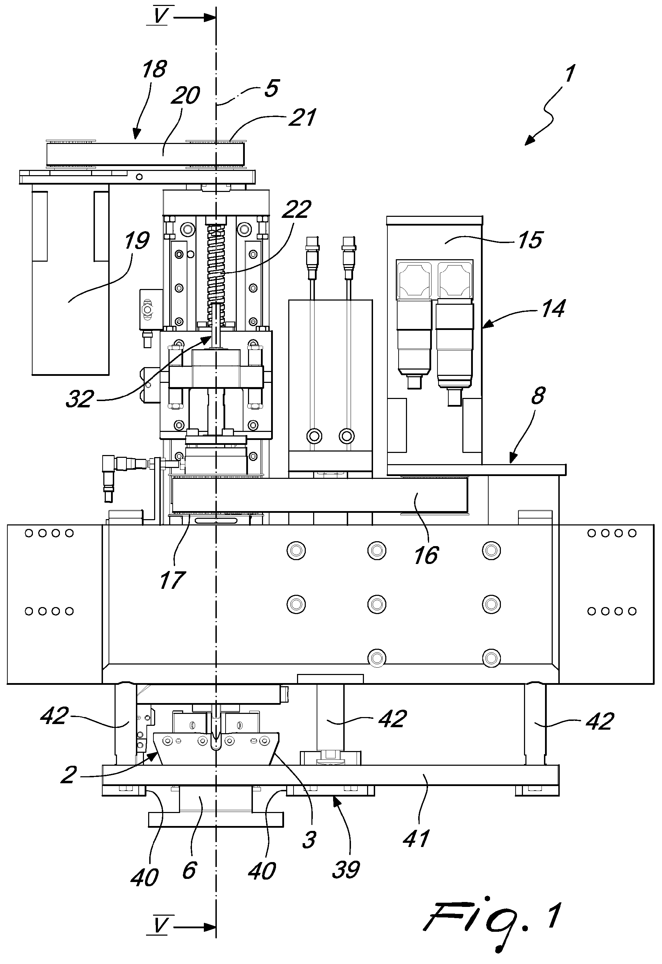

Figure 1 is a front elevation view of the device according to the invention;

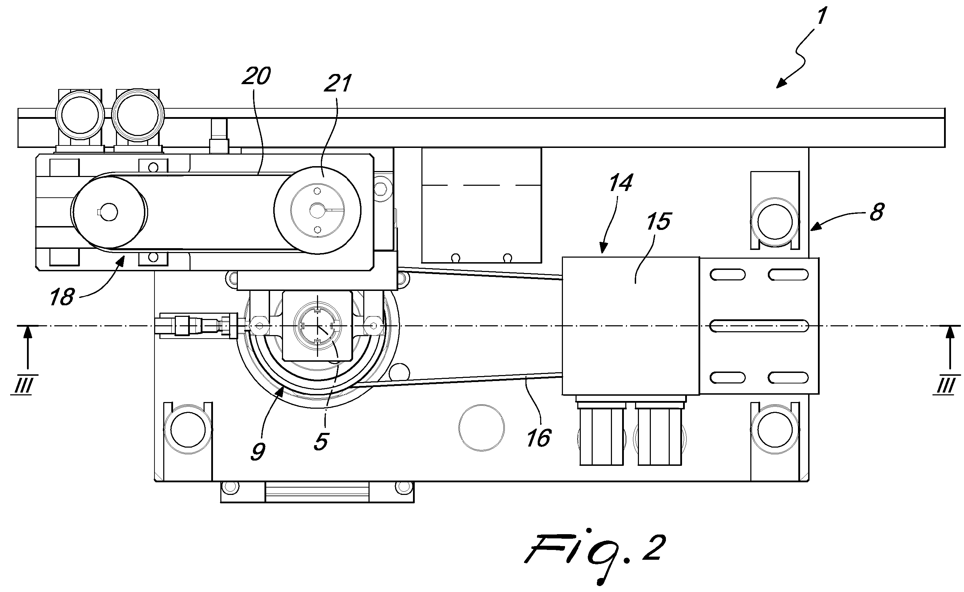

Figure 2 is a plan view from above of the device according to the invention;
Figure 3 is a sectional view of Figure 2, taken along the line III-III;
Figure 4 is a sectional view of the device according to the invention, as in Figure 3 but with the conveyor in another operating condition;
Figure 5 is a sectional view of Figure 1, taken along the line V-V;
Figure 6 is a sectional view of the device, as in Figure 5 but with the conveyor and the wire feeder means in another operating condition.

With reference to the figures, the device according to the invention, which is generally designated with the reference numeral 1, has the particularity of comprising a conveyor 2, which defines a sliding surface 3 for the wire 4 to be wound, and such sliding surface 3 is extended around a main axis 5 and can be arranged around the axis of the stator or rotor core 6 around which the wire 4 is to be wound. The device according to the invention comprises means for feeding 7 the wire 4 to be wound, which are adapted to dispense the wire 4 onto the sliding surface 3 of the conveyor 2.

The feeder means 7 can rotate about the main axis 5 with respect to the conveyor 2 so as to actuate in each instance the deposition of turns of wire 4 around the sliding surface 3 of the conveyor 2, which can be actuated with an alternating motion along the main axis 5 with respect to the stator or rotor core 6 in order to progressively release these turns around the stator or rotor core 6.

Conveniently, in order to facilitate the passage of the turns of wire 4 from the sliding surface 3 of the conveyor 2 to the stator or rotor core 6, the sliding surface 3 of the conveyor 2 has a shape that tapers progressively in the direction of an axial end thereof. Such shape, according to the requirements and to the shape of the stator or rotor core 6, can be conical, with a circular cross-section, or pyramid-like with appropriately radiused edges, as shown, or it can also have an even more complex shape which in any case tapers progressively in the direction of one end of the conveyor 2. Furthermore, again for this reason, the sliding surface 3 is suitably polished.

In greater detail, the device according to the invention comprises a supporting structure 8, which can be moved in a manner that is known per se along two or more axes by a programmable electronic command and control system, which supervises the operation of the winding machine on which the device 1 is mounted.

The supporting structure 8 rotatably supports a spindle 9 that is composed of an outer shaft 10, the axis of which constitutes the main axis 5, and an inner shaft 11, which is arranged internally and coaxially to the outer shaft 10.

The outer shaft 10 is supported, so that it can rotate about its own axis 5, by the supporting structure 8 by way of the interposition of bearings 12.

The inner shaft 11 is connected, in rotation about its own axis, which coincides with the main axis 5, to the outer shaft 10 by way of a tab 13. In this manner, the inner shaft 11, despite being integral with the outer shaft 10 in rotation about the main axis 5, can slide along such main axis 5 with respect to the outer shaft 10.

For the sake of convenience of description and for the sake of greater clarity, reference will be made hereinafter to the orientation as shown in the accompanying figures, in which the main axis 5 is arranged vertically, without altering the fact that the device 1 according to the invention, and therefore also the main axis 5, may have any orientation according to the requirements.

The device according to the invention comprises means 14 for actuating the spindle 9 with a rotary motion about the main axis 5, which are constituted by a first motor 15, for example an electric motor, the output shaft of which is connected, by way of a belt 16, to a pulley 17 that is fixed coaxially to the outer shaft 10. The first motor 15 is connected, with its body, to the supporting structure 8.

The device according to the invention comprises means 18 for actuating the inner shaft 11 with an alternating motion along the main axis 5 with respect to the outer shaft 10 and to the supporting structure 8. These actuation means 18 of the inner shaft 11 comprise a second motor 19, for example an electric motor, which is also mounted on the supporting structure 8 and is connected, by way of a belt 20, to a pulley 21, which is connected to a transmission that is capable of converting the rotary motion of the output shaft of the second motor 19 to a translational motion of the inner shaft 11. In the illustrated embodiment, this transmission is constituted by a screw 22, to which the pulley 21 is fixed coaxially and which mates with a female thread 23, which is connected to a thrust bearing coupling 24 that is fixed to the upper end of the inner shaft 11. The screw 22-female thread 23 transmission can be of the recirculating ballscrew type, so as to reduce as much as possible the overall friction of the transmission.

The spindle 9 is provided with means 25 for the engagement and centering of the spindle 9 with respect to the stator or rotor core 6 around which the wire 4 is to be wound. Such engagement and centering means 25 are associated with the lower axial end, i.e., with the opposite axial end with respect to the end connected to the thrust bearing 24, of the inner shaft 11.

The conveyor 2 is also associated with the lower end of the inner shaft 11 and is decoupled from the rotation of the inner shaft 11 about the main axis 5.

More particularly, the engagement and centering means 25 comprise a resting head 28, which is connected to an auxiliary shaft 26 that is associated coaxially with the inner shaft 11, in which there is a seat in which part of the auxiliary shaft 26 can slide so that the inner shaft 11 can slide axially, downward or upward in the figures, while the resting head 28 remains stationary and engaged with the stator or rotor core 6. The resting head 28 can be coupled to an axial end of the stator or rotor core 26, for example by way of a coupling of geometric type, so as to maintain, when the resting head engages the stator or rotor core 6, the coaxial arrangement between the spindle 9 and the stator or rotor core 6.

The conveyor 2 is fixed to a sleeve 43, which can slide along the auxiliary shaft 26, by virtue of the action of the inner shaft 11 which rests against an axial end thereof.

Bearings 27 are interposed between the sleeve 43 and the inner shaft 11 so as to disengage the sleeve 43 and the conveyor 2 from the rotation of the inner shaft 11 about the main axis 5.

Furthermore, elastic means are interposed between the sleeve 43 and the auxiliary shaft 26, are constituted by a spring 31, contrast the downward sliding of the sleeve 43 owing to the thrust applied by the inner shaft 11, and cause the rise of the sleeve 43 along the auxiliary shaft 26 when this thrust ceases.

The resting head 28 is provided with a pair of slots 29, which are elongated along a direction that is parallel to the main axis 5, inside each of which a pin 30 engages slidingly, and is fixed to the sleeve 43 and is oriented at right angles to the main axis 5. In this manner, the sleeve 43, pushed by the inner shaft 11 or by the spring 31, can slide axially with respect to the resting head 28 for the entire length of the slots 29. Moreover, the engagement of the pins 30 with the slots 29 allows the disengagement of the resting head 28 from the stator or rotor core by way of lifting the inner shaft 28 or the entire supporting structure 8.

The means 7 for feeding the wire 4 comprise a guide 32 for the wire 4, which is integral with the spindle 9 in rotation about the main axis 5 and defines a path for the wire 4, which has a portion 33 that is extended internally and coaxially to the spindle 9 and an end portion 34 that is extended away from the main axis 5. This end portion 34 leads outside, laterally with respect to the sliding surface 3 of the conveyor 2.

More particularly, the guide 32 of the wire 4 comprises a supporting block 35, which is fixed to the outer shaft 10 and is accommodated partially within a hollow that is provided especially in the inner shaft 11. This supporting block 35 supports, so that they can rotate about the corresponding axes that are arranged at right angles to the main axis 5, two guiding pulleys, respectively a first guiding pulley 36, which is arranged proximate to the main axis 5, and a second guiding pulley 37, which is arranged further away from the main axis 5 than the first guiding pulley 36 so as to obtain an arrangement of the wire 4, between these two pulleys 36, 37, along a direction that is inclined with respect to the main axis 5. In output from the second guiding pulley 37 there is a tube 38 for dispensing the wire 4, which also is mounted on the supporting block 35 and is oriented so that its axis is parallel to the main axis 5.

Advantageously, means 39 for containing the arc traced by the wire 4 in output from the tube 38 are provided.

These containment means 39 comprise lateral barriers 40, which are arranged laterally to the conveyor 2. The lateral barriers 40 are mounted on a frame 41 which is fixed to guiding posts 42, which are oriented parallel to the main axis 5 and are supported slidingly by the supporting structure 8. The frame 41 can move on command with respect to the supporting structure 8 parallel to the main axis 5 in order to make it possible to position the lateral barriers 40 around the stator or rotor core 6 around which the wire 4 is being wound in order to prevent the wire 4, during winding, from interfering with any other stator or rotor cores that are arranged laterally. The movement of the frame 41 with respect to the supporting structure 8 can be obtained, in a manner that is known per se, for example by way of a hydraulic or pneumatic actuator or a mechanical actuator.

The operation of the device according to the invention is as follows.

In each instance, by taking advantage of the possibility of movement of the supporting structure 8, the resting head 28 is arranged coaxially to a stator or rotor core 6, around which the wire 4 is to be wound. Again by taking advantage of the possibility of movement of the supporting structure 8, the resting head 28 is engaged with an axial end of the stator or rotor core 6 to be wound.

By way of the actuation of the second motor 19, the inner shaft 11 is moved along the main axis 5 so as to move the conveyor 2 proximate to the axial end of the stator or rotor core 6 that is opposite with respect to the axial end with which the resting head 28 has engaged.

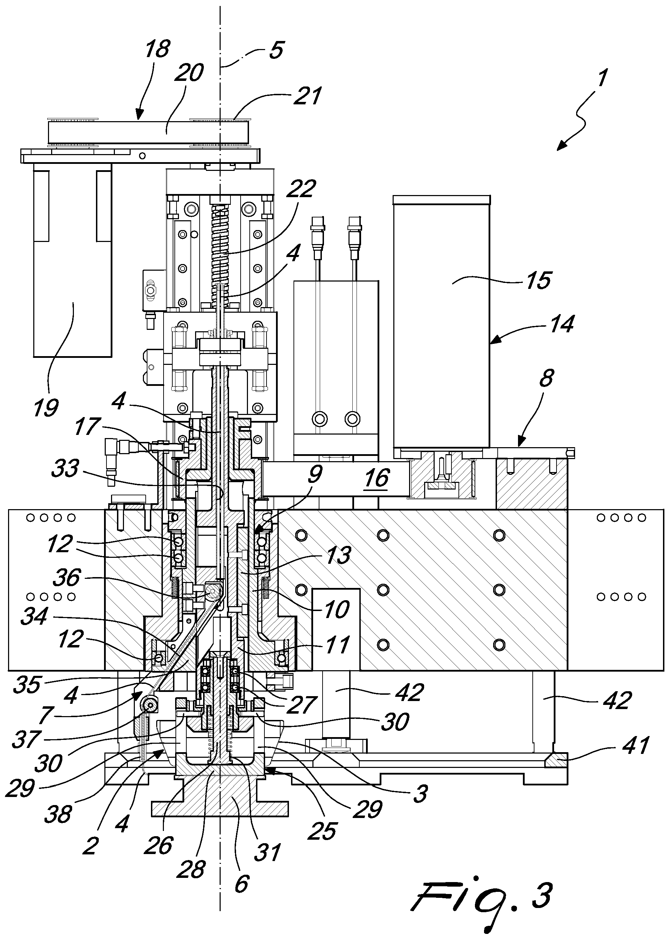

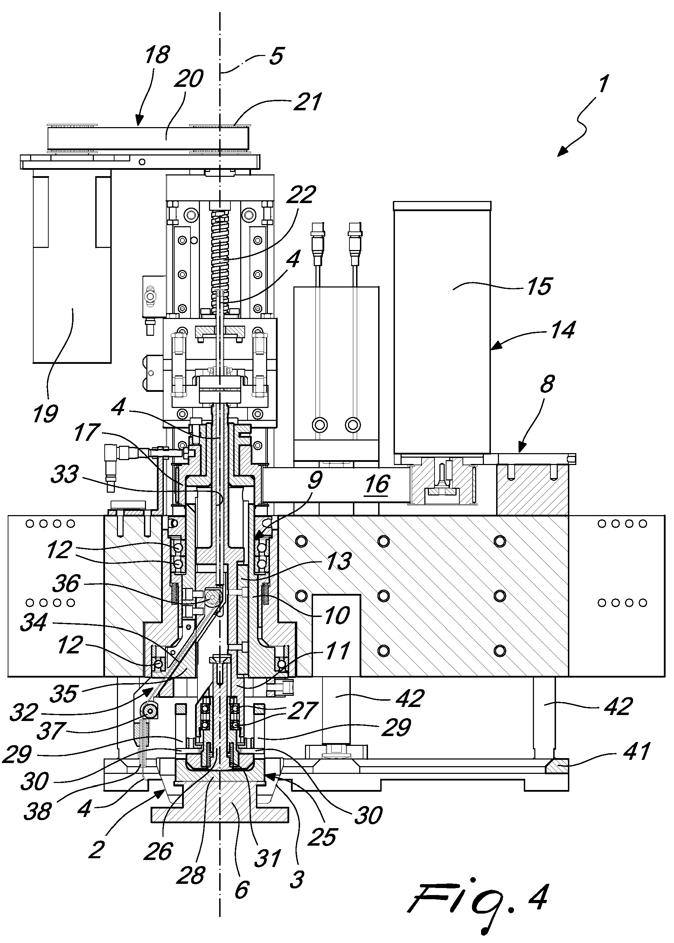

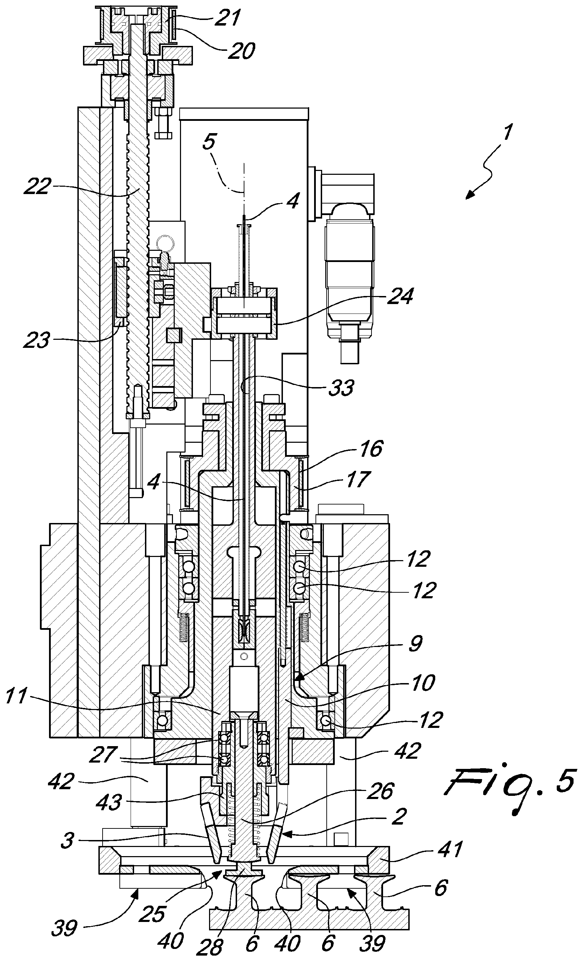

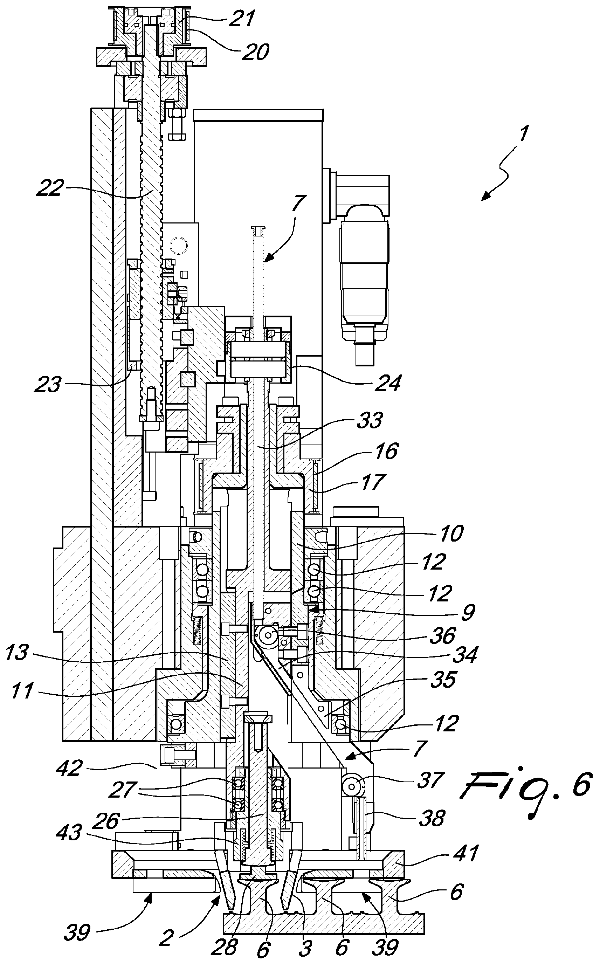

The initial end of the wire 4, in output from the tube 38, is locked beforehand, in a manner that is known per se, laterally to the stator or rotor core 6 to be wound. By way of the actuation of the first motor 15, the rotation of the spindle 9, and therefore of the outer shaft 10 and of the inner shaft 11 about the main axis 5, is produced. At the same time, the second motor 19 is also actuated so as to move the inner shaft 11 with an alternating motion along the main axis 5 with respect to the outer shaft 10, as is evident from the comparison between Figure 3 and Figure 4 and between Figure 5 and Figure 6. In this manner, the tube 38 progressively deposits turns of wire 4 onto the sliding surface 3 of the conveyor 2 which, by virtue of its alternating motion along the main axis 5 produced by the alternating motion of the inner shaft 11, and of its particular shape, which tapers in the direction of its end that is directed toward the axial end of the stator or rotor core 6 that is opposite with respect to the axial end with which the resting head 28 engages, progressively transfers the turns of wire 4 around the stator or rotor core 6. These turns of wire 4, by virtue of the tensioning of the wire 4 performed upstream of the device according to the invention by way of tensioning devices of known type which are not shown, tighten around the stator or rotor core 6, providing multiple winding layers according to the requirements.

During the deposition of the turns of wire 4 onto the sliding surface 3 of the conveyor 2, the lateral barriers 40 are arranged around the stator or rotor core 6, preventing the wire 4, in output from the tube 38, from being able to interfere with other stator or rotor cores that are arranged in the vicinity of the stator or rotor core 6 being wound. The figures show a base that supports three stator or rotor poles 6 arranged side by side, which are wound sequentially with the wire 4; however, the device according to the invention can be used to wind individual stator or rotor poles or a different number with respect to the ones shown.

It should be noted that the end portion 34 of the path for the wire 4 that extends from the guiding pulley 36 to the tube 38 constitutes a sort of flyer, which by way of the rotation of the spindle 9 can be actuated with a rotary motion about the main axis 5 with a significantly higher rotation rate than the rotation rates that can be achieved with the devices currently used to wind wire around stator or rotor cores, since the distribution of the wire within the space around the stator or rotor core 6 is entrusted to the movement of the conveyor 2. In this manner it is possible to significantly reduce the time required to wind a stator or rotor core and therefore significantly increase the productivity of the apparatus used to perform the winding.

In practice it has been found that the device according to the invention achieves fully the intended aim, since the combination of the flyer with the conveyor makes it possible to achieve significantly higher winding rates than those achievable with devices of the known type with a tube that rotates about the stator or rotor core and therefore makes it possible to achieve distinctly higher productivity levels in the provision of stator or rotor windings.

The device thus conceived is susceptible of numerous modifications and variations, all of which are within the scope of the appended claims; all the details may furthermore be replaced with other technically equivalent elements.

In practice, the materials used, so long as they are compatible with the specific use, as well as the dimensions, may be any according to the requirements and the state of the art.

The disclosures in Italian Patent Application No. MI2013A002206 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for inserting, winding and layering a wire on one or more stator or rotor cores, comprising:
- a conveyor (2) provided with a sliding surface (3) for the wire (4) to be wound; said sliding surface (3) extending around a main axis (5) and being arrangeable around the axis of the stator or rotor core (6) around which the wire (4) is to be wound; and
- means (7) for feeding the wire (4) to be wound, which are adapted to dispense the wire (4) onto said sliding surface (3) of the conveyor (2);
said feeder means (7) being rotatable about said main axis (5) with respect to said conveyor (2) in order to deposit turns of wire (4) around said sliding surface (3) of the conveyor (2) and said conveyor (2) being actuatable with an alternating motion along said main axis (5) with respect to the stator or rotor core (6) in order to progressively release said turns of wire (4) around said stator or rotor core (6),
the device further comprising:
- a supporting structure (8):
- a spindle (9), which is supported rotatably by said supporting structure (8) and is composed of an outer shaft (10), which defines said main axis (5) with its own axis, and of an inner shaft (11), which is arranged internally and coaxially to said outer shaft (10); said inner shaft (11) being integral with said outer shaft (10) in rotation about said main axis (5) with respect to said supporting structure (8) and being movable on command along said main axis (5) with respect to said outer shaft (10);
- means (25) for engaging and centering said spindle (9), which are associated with an axial end of said inner shaft (11) and can engage the stator or rotor core (6) around which the wire (4) is to be wound;
said conveyor (2) being associated with said axial end of the inner shaft (11) and being decoupled from the rotation of said inner shaft (11) about said main axis (5); said feeder means (7) comprising a guide (32) of the wire (4), which is integral with said spindle (9) in rotation about said main axis (5) and defines a path for the wire (4) that is extended for a portion (33) internally and coaxially to said spindle (9) and for an end portion (34) away from said main axis (5); said end portion (34) leading externally laterally to said sliding surface (3) of the conveyor (2); said guide (32) of the wire (4) being able to rotate about said main axis (5) integrally with said spindle (9) for the deposition of turns of wire (4) around said sliding surface (3) of the conveyor (2) and said inner shaft (11) being actuatable with an alternating motion along said main axis (5) in order to actuate with an alternating motion along said main axis (5) said conveyor (2) for the progressive passage of said turns of wire (4) from said sliding surface (3) of the conveyor (2) to the stator or rotor core (6),
said engagement and centering means (25) comprising a resting head (28), which is associated with an axial end of said inner shaft (11) and can engage with an axial end of the stator or rotor core (6).
said resting head (28) being connected to an auxiliary shaft (26), which is associated coaxially with said inner shaft (11); said conveyor (2) being connected to a sleeve (43) that can slide, by the action of said inner shaft (11), along said auxiliary shaft (26) and, between said sleeve (43) and said inner shaft (11), there being interposed bearings (27) for decoupling said sleeve (43) and said conveyor (2) from the rotation of said inner shaft (11) about said main axis (5),
**characterized in that**
said inner shaft (11) comprising a seat in which a part of the auxiliary shaft (26) can slide so that the inner shaft (11) can slide axially while the resting head (28) remains stationary and engaged with the stator core or rotor (6).

2. The device according to claim 1, **characterized in that** said sliding surface (3) of the conveyor (2) has a shape that tapers progressively in the direction of an axial end thereof in order to facilitate the sliding of the turns of wire (4) in their passage from said conveyor (2) to the stator or rotor core (6).

3. The device according to one or more of the preceding claims, **characterized in that** said guide (32) of the wire (4) comprises a supporting block (35), which is fixed to said outer shaft (10) and supports, so that they can rotate about the respective axes arranged at right angles to said main axis (5), two guiding pulleys, respectively: a first guiding pulley (36), which is arranged proximate to said main axis (5), and a second guiding pulley (37), which is arranged further away from said main axis (5) for an arrangement of the wire (4), between said two guiding pulleys (36, 37), along a direction that is inclined with respect to said main axis (5); in output from said second guiding pulley (37) there being a tube (38) for dispensing the wire (4), which is oriented substantially parallel to said main axis (5).

4. The device according to one or more of the preceding claims, **characterized in that** said sleeve (43) can slide, along said auxiliary shaft (26), in one direction, by the action of said inner shaft (11) in contrast with the action of elastic means (31).

5. The device according to one or more of the preceding claims, **characterized in that** it comprises means (39) for containing the arc traced by the wire (4) in output from said tube (38).

6. The device according to one or more of the preceding claims, **characterized in that** said containment means (39) comprise lateral barriers (40), which are arranged laterally to said conveyor (2).

7. The device according to one or more of the preceding claims, **characterized in that** said lateral barriers (40) are mounted on a frame (41) that can move on command with respect to said supporting structure (8) parallel to said main axis (5).

## Patentansprüche

1. Eine Vorrichtung zum Einsetzen, Aufwickeln und Schichten eines Drahts auf einen oder mehrere Stator- oder Rotorkerne, die Folgendes umfasst:
- einen Förderer (2), ausgestattet mit einer Gleitoberfläche (3) für den aufzuwickelnden Draht (4), wobei sich die Gleitoberfläche (3) um eine Hauptachse (5) herum erstreckt und um die Achse des Stator- oder Rotorkerns (6) herum angeordnet werden kann, um den der Draht (4) gewickelt werden soll; und
- Mittel (7) zum Zuführen des zu wickelnden Drahts (4), die ausgebildet sind, um den Draht (4) an die Gleitoberfläche (3) des Förderers (2) abzugeben;
wobei die Mittel zum Zuführen (7) um die Hauptachse (5) mit Bezug auf den Förderer (2) drehbar sind, um Wicklungen von Draht (4) um die Gleitoberfläche (3) des Förderers (2) zu platzieren, und wobei der Förderer (2) mit einer alternierenden Bewegung entlang der Hauptachse (5) im Verhältnis zum Stator- oder Rotorkern (6) angetrieben werden kann, um die Wicklungen des Drahts (4) um den Stator- oder Rotorkern (6) nach und nach loszulassen,
wobei die Vorrichtung weiter Folgendes umfasst:
- eine tragende Struktur (8),
- eine Spindel (9), die drehbar von der tragenden Struktur (8) getragen wird und aus einer Außenwelle (10), die mit ihrer eigenen Achse die Hauptachse (5) bestimmt, und aus einer Innenwelle (11) besteht, welche innerhalb und koaxial mit der Außenwelle (10) angeordnet ist; wobei die Innenwelle (11) aus einem Stück mit der Außenwelle (10) ist in der Drehung um die Hauptachse (5) im Verhältnis zu der tragenden Struktur (8) und auf Befehl im Verhältnis zu der Außenwelle (10) entlang der Hauptachse (5) beweglich ist;
- Mittel (25) zum Halten und Zentrieren der Spindel (9), die mit einem axialen Ende der Innenwelle (11) verbunden sind und im Stator- oder Rotorkern (6) eingreifen können, um den der Draht (4) gewickelt werden soll;
wobei der Förderer (2) mit dem axialen Ende der Innenwelle (11) verbunden und von der Drehung der Innenwelle (11) um die Hauptachse (5) entkoppelt ist; wobei das Zuführmittel (7) eine Führung (32) des Drahts (4) umfasst, die in der Drehung um die Hauptachse (5) integral mit der Spindel (9) ist und einen Pfad für den Draht (4) bestimmt, der über einen Abschnitt (33) innerhalb und koaxial mit der Spindel (9) und über einen Endabschnitt (34) fort von der Hauptachse (5) verlängert ist;
wobei der Endabschnitt (34) außerhalb seitlich zu der Gleitoberfläche (3) des Förderers (2) führt; wobei die Führung (32) des Drahts (4) in der Lage ist, sich integral zusammen mit der Spindel (9) um die Hauptachse (5) zu drehen, zum Platzieren der Wicklungen des Drahts (4) um die Gleitoberfläche (3) des Förderers (2), und wobei die Innenwelle (11) mit einer alternierenden Bewegung entlang der Hauptachse (5) angetrieben werden kann, um mit einer alternierenden Bewegung entlang der Hauptachse (5) den Förderer (2) anzutreiben, zum Zwecke des progressiven Übergangs der Wicklungen des Drahts (4) von der Gleitoberfläche (3) des Förderers (2) auf den Stator- oder Rotorkern (6),
wobei die Halte- und Zentriermittel (25) einen Auflagekopf (28) umfassen, der mit einem axialen Ende der Innenwelle (11) verbunden ist und mit einem axialen Ende des Stator- oder Rotorkerns (6) in Eingriff stehen kann,
wobei der Auflagekopf (28) mit einer zusätzlichen Welle (26) verbunden ist, die koaxial mit der Innenwelle (11) verbunden ist; wobei der Förderer (2) mit einer Hülse (43) verbunden ist, die durch Wirkung der Innenwelle (11) entlang der zusätzlichen Welle (26) gleiten kann, und wobei zwischen der Hülse (43) und der Innenwelle (11) Lager (27) zum Entkoppeln der Hülse (43) und des Förderers (2) von der Drehung der Innenwelle (11) um die Hauptachse (5) angeordnet sind,
**dadurch gekennzeichnet, dass**
die Innenwelle (11) einen Sitz umfasst, in dem ein Teil der zusätzlichen Welle (26) gleiten kann, so dass die Innenwelle (11) axial gleiten kann, während der Auflagekopf (28) stationär und mit dem Statorkern oder Rotor (6) in Eingriff bleibt.

2. Die Vorrichtung gemäß Anspruch 1, **dadurch gekennzeichnet, dass** die Gleitoberfläche (3) des Förderers (2) eine Form hat, die zunehmend in die Richtung eines axialen Endes desselben spitz zuläuft, um das Gleiten der Wicklungen des Drahts (4) in ihrem Übergang von dem Förderer (2) zum Stator- oder Rotorkern (6) zu erleichtern.

3. Die Vorrichtung gemäß einem oder mehreren der obigen Ansprüche, **dadurch gekennzeichnet, dass** die Führung (32) des Drahts (4) einen Stützblock (35) umfasst, der an der Außenwelle (10) befestigt ist und, drehbar um die jeweiligen Achsen, die in rechten Winkeln zu der Hauptachse (5) angeordnet sind, zwei Führungsrollen trägt, nämlich eine erste Führungsrolle (36), die neben der Hauptachse (5) angeordnet ist, und eine zweite Führungsrolle (37), die weiter entfernt von der Hauptachse (5) angeordnet ist, zum Zwecke einer Anordnung des Drahts (4), zwischen den zwei Führungsrollen (36, 37), entlang einer Richtung, die im Verhältnis zu der Hauptachse (5) geneigt ist; wobei sich im Ausgang von der zweiten Führungsrolle (37) ein Rohr (38) zur Abgabe des Drahts (4) befindet, welches im Wesentlichen parallel zu der Hauptachse (5) ausgerichtet ist.

4. Die Vorrichtung gemäß einem oder mehreren der obigen Ansprüche, **dadurch gekennzeichnet, dass** die Hülse (43) aufgrund der Wirkung der Innenwelle (11) im Kontrast zur Wirkung elastischer Mittel (31) entlang der zusätzlichen Welle (26), in eine Richtung, gleiten kann.

5. Die Vorrichtung gemäß einem oder mehreren der obigen Ansprüche, **dadurch gekennzeichnet, dass** sie Mittel (39) zur Beinhaltung des Bogens umfasst, der vom Draht (4) im Ausgang von dem Rohr (38) beschrieben wird.

6. Die Vorrichtung gemäß einem oder mehreren der obigen Ansprüche, **dadurch gekennzeichnet, dass** die Mittel (39) zur Beinhaltung seitliche Begrenzungen (40) umfassen, die seitlich zu dem Förderer (2) angeordnet sind.

7. Die Vorrichtung gemäß einem oder mehreren der obigen Ansprüche, **dadurch gekennzeichnet, dass** die seitlichen Begrenzungen (40) auf einen Rahmen (41) montiert sind, der sich auf Befehl im Verhältnis zu der tragenden Struktur (8) parallel zu der Hauptachse (5) bewegen kann.

## Revendications

1. Dispositif pour insérer, enrouler et stratifier un fil sur un ou plusieurs noyau(x) de stator ou de rotor, comportant :
- un convoyeur (2) muni d'une surface de glissement (3) pour le fil (4) à enrouler, ladite surface de glissement (3) s'étendant autour d'un axe principal (5) et pouvant être disposée autour de l'axe du noyau de stator ou rotor (6) autour duquel doit être enroulé le fil (4) ; et
- des moyens d'alimentation (7) en fil (4) à enrouler, qui sont conçus pour faire venir le fil (4) sur ladite surface de glissement (3) du convoyeur (2) ;
lesdits moyens d'alimentation (7) pouvant tourner autour dudit axe principal (5) par rapport audit convoyeur (2) afin de déposer des spires de fil (4) autour de ladite surface de glissement (3) du convoyeur (2) et ledit convoyeur (2) étant actionnable avec un mouvement alterné suivant ledit axe principal (5) par rapport au noyau stator ou rotor (6) afin de libérer progressivement lesdites spires de fil (4) autour dudit noyau stator ou rotor (6),
le dispositif comportant en outre :
- une structure de support (8) ;
- une broche (9), qui est supportée par ladite structure de support (8) de manière à pouvoir tourner et qui est composée d'un arbre extérieur (10), lequel définit ledit axe principal (5) avec son propre axe, et d'un arbre intérieur (11), lequel est disposé à l'intérieur dudit arbre extérieur (10) et coaxialement à ce dernier, ledit arbre intérieur (11) tournant solidairement avec ledit arbre extérieur (10) autour dudit axe principal (5) par rapport à ladite structure de support (8) et pouvant se déplacer à la demande suivant ledit axe principal (5) par rapport audit arbre extérieur (10) ;
- des moyens (25) pour solliciter et centrer ladite broche (9), lesquels sont associés à une extrémité axiale dudit arbre intérieur (11) et peuvent venir contre le noyau stator ou rotor (6) autour duquel doit être enroulé le fil (4) ;
ledit convoyeur (2) étant associé à ladite extrémité axiale de l'arbre intérieur (11) et étant dissocié de la rotation dudit arbre intérieur (11) autour dudit axe principal (5), lesdits moyens d'alimentation (7) comprenant un guide (32) du fil (4), qui tourne solidairement avec ladite broche (9) autour dudit axe principal (5) et définit pour le fil (4) un trajet qui s'étend sur une partie (33) à l'intérieur de ladite broche (9) et coaxialement à cette dernière et, sur une partie terminale (34), à l'écart dudit axe principal (5), ladite partie terminale (34) aboutissant à l'extérieur, sur le côté de ladite surface de glissement (3) du convoyeur (2), ledit guide (32) du fil (4) pouvant tourner autour dudit axe principal (5) solidairement à ladite broche (9) pour le dépôt de spires de fil (4) autour de ladite surface de glissement (3) du convoyeur (2) et ledit arbre intérieur (11) étant actionnable avec un mouvement alterné suivant ledit axe principal (5) afin d'actionner ledit convoyeur (2) avec un mouvement alterné suivant ledit axe principal (5) pour que lesdites spires de fil (4) passent progressivement de ladite surface de glissement (3) du convoyeur (2) au noyau stator ou rotor (6),
lesdits moyens de sollicitation et de centrage (25) comprenant une tête d'appui (28), laquelle est associée à une extrémité axiale dudit arbre intérieur (11) et peut venir contre une extrémité axiale du noyau stator ou rotor (6),
ladite tête d'appui (28) étant reliée à un arbre auxiliaire (26), lequel est associé coaxialement audit arbre intérieur (11), ledit convoyeur (2) étant relié à un fourreau (43) qui peut coulisser, sous l'action dudit arbre intérieur (11), le long dudit arbre auxiliaire (26), et des roulements (27) étant intercalés entre ledit fourreau (43) et ledit arbre intérieur (11) pour dissocier ledit fourreau (43) et ledit convoyeur (2) d'avec la rotation dudit arbre intérieur (11) autour dudit axe principal (5),
**caractérisé en ce que**
ledit arbre intérieur (11) comprenant un siège dans lequel une partie de l'arbre auxiliaire (26) peut coulisser de façon que l'arbre intérieur (11) puisse coulisser axialement tandis que la tête d'appui (28) reste immobile au contact du noyau stator ou rotor (6).

2. Dispositif selon la revendication 1, **caractérisé en ce que** ladite surface de glissement (3) du convoyeur (2) a une forme progressivement conique en direction d'une extrémité axiale de celle-ci afin de faciliter le glissement des spires de fil (4) lorsqu'elles passent dudit convoyeur (2) au noyau stator ou rotor (6).

3. Dispositif selon une ou plusieurs des revendications précédentes, **caractérisé en ce que** ledit guide (32) du fil (4) comprend un bloc de support (35), lequel est fixé audit arbre extérieur (10) et supporte, de façon qu'elles puissent tourner autour des axes respectifs perpendiculaires audit axe principal (5), deux poulies de guidage, à savoir respectivement une première poulie de guidage (36) disposée à proximité immédiate dudit axe principal (5) et une seconde poulie de guidage (37) disposée plus loin dudit axe principal (5) pour que le fil (4) se place, entre lesdites deux poulies de guidage (36, 37), dans une direction inclinée par rapport audit axe principal (5), à la sortie de ladite seconde poulie de guidage (37) se trouvant un tube (38) pour distribuer le fil (4), ledit tube étant orienté sensiblement parallèlement audit axe principal (5).

4. Dispositif selon une ou plusieurs des revendications précédentes, **caractérisé en ce que** ledit fourreau (43) peut coulisser, le long dudit arbre auxiliaire (26), dans un seul sens, sous l'action dudit arbre intérieur (11) à l'encontre de l'action de moyens élastiques (31).

5. Dispositif selon une ou plusieurs des revendications précédentes, **caractérisé en ce qu'**il comporte des moyens (39) pour contenir l'arc tracé par le fil (4) à sa sortie dudit tube (38).

6. Dispositif selon une ou plusieurs des revendications précédentes, caractérisé en ce lesdits moyens (39) pour contenir l'arc comprennent des barrières latérales (40), lesquelles sont disposés latéralement sur ledit convoyeur (2).

7. Dispositif selon une ou plusieurs des revendications précédentes, **caractérisé en ce que** lesdites barrières latérales (40) sont montées sur un cadre (41) mobile à la demande par rapport à ladite structure de support (8) parallèlement audit axe principal (5).
